Europäisches Patentamt

European Patent Office

Office européen des brevets

(11) Publication number: **0 100 418**
**B1**

(12) **EUROPEAN PATENT SPECIFICATION**

(45) Date of publication of patent specification: **12.04.89**

(51) Int. Cl.⁴: **G 02 F 1/29**

(21) Application number: **83105932.4**

(22) Date of filing: **16.06.83**

(54) Opto-optical light deflector.

(30) Priority: **29.07.82 US 403213**

(43) Date of publication of application:
**15.02.84 Bulletin 84/07**

(45) Publication of the grant of the patent:
**12.04.89 Bulletin 89/15**

(84) Designated Contracting States:
**DE FR GB**

(56) References cited:
**GB-A-1 432 947**
**US-A-3 790 252**
**IBM TECHNICAL DISCLOSURE BULLETIN, vol. 14, no. 7, December 1971, pages 2035,2036, New York, US; K.S. PENNINGTON et al.: "Fast amplifying opto-optical switch"**
**JAPANESE JOURNAL OF APPLIED PHYSICS, vol. 20, no. 6, June 1981, pages 1129-1133, Tokyo, JP; A. MORIMOTO et al.: "A picosecond optical gate using photo-induced grating"**

(73) Proprietor: **International Business Machines Corporation**
**Old Orchard Road**
**Armonk, N.Y. 10504 (US)**

(72) Inventor: **Roosen, Gerald Marie Joseph**
**5336 Monterey Road Apt. 2**
**San Jose California 95111 (US)**
Inventor: **Sincerbox, Glenn Tavernia**
**1309 Pernich Court**
**San Jose California 95120 (US)**

(74) Representative: **Ahlman, Bertel et al**
**IBM Svenska AB Intellectual Property Department**
**S-163 92 Stockholm (SE)**

EP 0 100 418 B1

## Description

This invention relates to an optic device for light deflection and more particularly to an opto-optical light deflector/modulator.

Current non-mechanical light deflection techniques include electro optic and acousto-optic devices. Electro optic devices are relatively fast since they are inertialess. They rotate the plane of polarization of incoming light by the linear electro optic Pockels effect in materials like potassium dihydrogen phosphate and by the addition of a following birefringent crystal cause the light to propagate as either the ordinary or extraordinary ray. By cascading electro optic and birefringent stages, a multi-spot light deflector is realized. This device usually requires large voltages for the logitudinal effect, on the order of thousands of volts, and complicates the electronics when high deflection rates (< μsec) are required. For the transverse effect smaller voltages are used, but a longer interaction length is required with the resulting reduction in aperture causing a reduction in resolution and alignment problem.

The acoustic-optic device operates by diffraction from a periodic structure, refractive index variation, introduced into an optically transparent material by a travelling acoustic wave. These are inherently small aperture devices because the small propagation velocity of the acoustic wave inside the material requires the cross section of the light beam to be small for the device to have a fast response time. In addition, use of a large aperture also introduces a distortion into the deflected wavefront as the periodicity of the diffracting structure changes from one side of the aperture to the other during deflection.

An opto-optical light deflector is disclosed in U.S. patent 3790252. The deflection of the light beam is achieved by changing in a spatially nonhomogeneous manner the refractive index of an interaction medium through which a control light beam and a controlling beam pass at an angle to each other. This approach varies the density of the diffraction material so that the density increases progressively, preferably linearly from one side to the other. One of the embodiments uses a diffraction pattern; however, this approach does not involve changing this diffraction pattern to achieve multiple deflection positions.

A high resolution opto-optical light deflector/modulator is described in copending prior European patent application No. 83102358.5 (EP—A—95563, published after the filing date of the present application), assigned to the assignee of the present invention. This deflector uses optically generated standing waves to induce a periodic refractive index variation which is used for diffraction purposes. This device has an improved aperture and is useful over a somewhat limited spectral bandwidth.

The present invention is defined in the attached claims.

An opto-optical light deflector/modulator has a transparent optical active medium, for example, barium titanate. The deflector has means for providing first and second coherent wave fronts of wavelength ($\lambda_0$) to travel in the medium to produce by interference an optically generated standing wave that induces a periodic refractive index variation in the medium suitable for diffraction purposes. The device has means for simultaneously tilting the orientation and changing the spacing of the optically generated standing wave. The addition of tilting permits the Bragg condition to be satisfied over a large spectral bandwidth resulting in a device suitable for use for creating large angular deflections. The device also includes means for providing a third wave front ($\lambda_1$) to travel in said medium which is diffracted by the periodic refractive index variation induced by the first and second wave fronts.

The present invention provides a light deflector/modulator with high resolution and large angle scanning capability.

The present invention also shows a significant improvement in both uniform efficiency and deflection angle sensitivity for wave front diffraction over the prior art technique.

For a future understanding of the invention, and of the objects and advantages thereof, reference will be had to the following detailed description and to the accompanying drawings and to the appended claims wherein the specific embodiments of the invention are shown.

The invention will now be described by way of example and reference to the accompanying drawings in which:

Fig. 1 is a top view of a preferred embodiment of the deflector in accordance with this invention;

Fig. 2 is an enlarged view showing the relationship between the tilting means, the lens and the recording medium;

Fig. 3 is an enlarged top view illustrating the effect of the tilt means on the beam in the recording medium; and

Fig. 4 is a graph comparing the effectiveness of this invention with the prior art approach.

This invention is concerned with a tilt correction factor for an opto-optically light deflector/modulator of the type described in copending European patent application EP—A—95563 which is included herein by reference thereto. This invention describes a technique for satisfying the Bragg condition over a large spectral bandwidth resulting in a device for large angular deflection. The invention includes passive means for tilting the orientation of the optically generated stading wave in response to a change in the wavelength of the first and second wave fronts. This passive means operates in real time and allows for higher resolution and large angle scanning in comparison to the invention described in EP—A—95563.

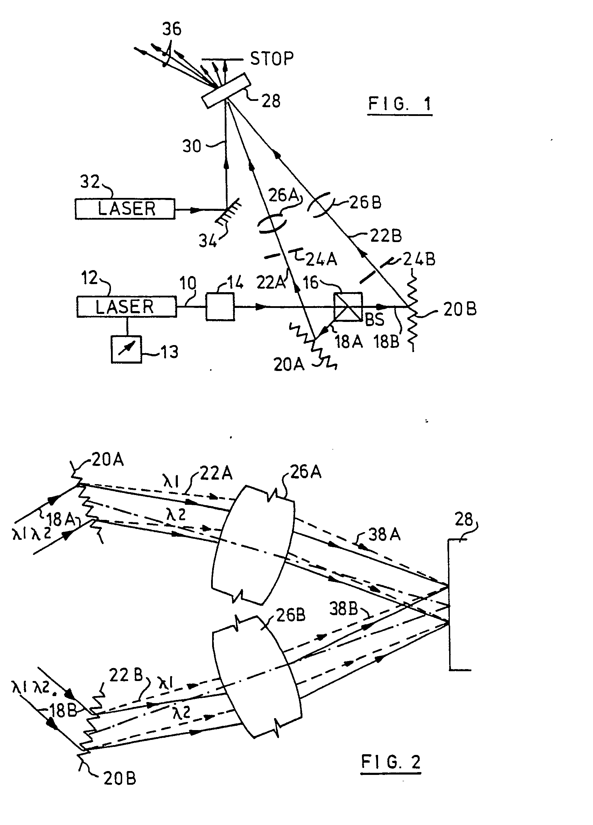

As shown in fig. 1, a wave front 10 from light source 12, for example an argon laser, passes through a polarization rotator 14 on its way to beam splitter 16. Device 13 varies the wavelength of light source 12. Beam splitter 16 provides wave fronts 18A and 18B which are directed to grating 20A and grating 20B respectively. Gratings 20A and 20B form the means for changing the direction of incident wave fronts 18A and 18B into beams 22A and 22B. The individual directions of the beams 22A and 22B change in response to a wavelength change of beam 10 according to the standard grating relationship. While the tilting means are shown as reflection gratings 20A and 20B, other elements exhibiting wavelength dependent dispersion or diffraction by either reflection or transmission, such as prisms, holographic elements and the like may be used to change the orientation of beams 18A and B. The redirected beams 22A and 22B pass through shutters 24A and 24B respectively. The beams then pass through optical means 26A and 26B respectively and are combined in recording medium 28 to form an interference pattern. Examples of the transparent recording medium are sodium vapor, varium titanate, bismuth silicon oxide, lithium niobate, ruby, liquid crystals and a liquid solution of organic saturable absorbers.

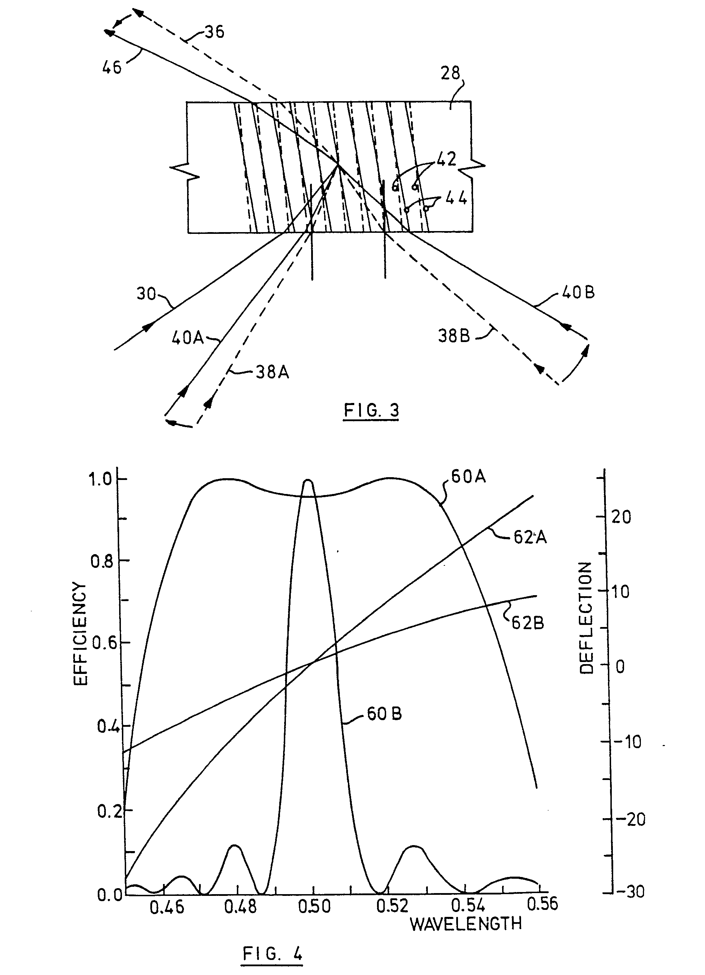

When the optically generated standing wave in recording medium 28 is illuminated with a third beam 30 from a source 32, for example, a helium neon laser, at wavelength λ by means of a mirror 34, then efficient diffraction of beam 30 into beam 36 occurs when the Bragg condition is satisfied. This will be more clearly illustrated in fig. 3.

A typical optical means 26A and 26B for combining beams 22A and 22B onto the recording medium 28 is shown in fig. 2. This is an example of an afocal optical system that maintains the collimation of beams 22A and 22B as they are diffracted by gratings 20A and 20B and directs them as another set of collimated beams 38A and 38B to overlap in medium 28. The two gratings 20A and 20B have different spatial frequencies 20A and 20B have different spatial frequencies. Using different spatial frequencies, the change in direction of each beam 22A and 22B will be different and will cause a simultaneous change in both the spacing and direction of the standing wave structure in the medium as the wavelength of beam 10 is changed.

As shown in fig. 3, simultaneously changing the wavelength and direction of the incident beams 38A and 38B to new beams 40A and 40B causes a change in the direction of the beams incident on the recording medium 28. By proper selection of the spatial frequencies of gratings 20A and 20B and/or angular manification of optical means 24A and 24B, the change in each beam can be adjusted and a simultaneous change in both the spacing and the direction of the standing wave 42 in the recording medium 28 is obtained.

The new standing wave 44 is tilted and changed in spacing such that illuminating beam 30 is efficiently deflected into the direction of beam 46.

As one particular embodiment, gratings 20A and 20B are transmission gratings having spatial frequencies of 590 lines/mm and 1400 lines/mm respectively. The illuminating beams 18A and 18B are incident onto the gratings at angles of 8.5° and 20.5° respectively. The diffracted beams at 0.501 μm are directed by afocal optical systems 26A and 26B, adjusted for angular magnification of 3.5X, to overlap and be incident on a lithium niobate crystal at angles to the crystal surface normal of 36.35° and 23.65° respectively.

The illuminating beam 30 of wavelength .633 μm is directed at the overlap region at an angle to the surface normal of 46.25°. A change in wavelength of the control beam 10 from 0.488 μm to 0.515 μm causes the deflected beam 36 to undergo an angular change in direction by 11.9 degrees to position 46.

According to another embodiment of the invention the grating 20A comprises the +1 diffraction order and grating 20B the −1 diffraction order from the same transmission or reflection diffraction grating.

The effectiveness of the fringe tilting means in maintaining high reconstruction efficiency over a broad deflection range is graphically illustrated in fig. 4. The corresponding change in angular deflection for the same wavelength range is shown in curves 62A or 62B for the device in accordance with this invention and the prior art device. The high spatial frequency configuration described above was used to generate the data representing deflection with (60A, 62A) and without (60B and 62B) wavelength control tilting. The curves 60A and 60B show the calculated variation in the diffraction efficiency of beam 30 as a function of the wavelength range of control beam 10 centered at 0.501 μm. As is evident in the figure, the fringe tilting technique produces curves 60A and 62A which shows a significant improvement in both uniform efficiency and deflection angle sensitivity over the prior art technique curves 60B and 62B. For this particular example, the full width half power tuning range increases from 0.014 μm to .097 μm and, more importantly, the deflection angle increases by more than one order of magnitude: from 2.6° to 43.6°. For a given wavelength tuning range, this represents an increase in deflection sensitivity from 185° per micrometer to 450° per micrometer.

## Claims

1. An opto-optical light deflector comprising a transparent optically active medium (28), means (10, 16) for providing first (22A) and second (22B) coherent wave fronts to travel in said medium thereby producing an optically generated standing wave (42) that induces a periodic variation in the optical properties for diffraction purposes, means (32) for providing a third wavefront (30) to travel in said medium, said third wave front being diffracted by the periodic variation, characterized by means (20A, 20B) for making the orientation of said optically generated standing wave tilt in response to any change in the wavelength of said first and second wavefronts, and means (13) for varying the wavelength of said first and second wavefronts to alter the periodicity of the variation, whereby the Bragg condition remains satisfied while the diffraction direction of said third wavefront is altered.

2. A deflector as described in claim 1 wherein said tilting means comprise first (20A) and second (20B) diffracting means.

3. A deflector as described in claim 1 wherein said tilting means include a transmission diffraction grating.

4. A deflector as described in claim 1 wherein said tilting means include a reflection diffraction grating.

5. A deflector as described in claim 1 wherein said tilting means include transmission halographic means.

6. A deflector as described in claim 1 wherein said tilting means include reflection holographic means.

7. A deflector as described in claim 1 wherein said tilting means include prism means.

8. A deflector as described in claim 2 and 3 wherein first and second tilting means comprise the +1 and −1 diffraction orders from the same transmission diffraction grating.

9. A deflector as described in claim 2 and 4 wherein first and second tilting means comprise the +1 and −1 diffraction orders from the same reflection diffraction grating.

**Patentansprüche**

1. Opto-optischer Lichtablenker mit einem transparenten optisch aktiven Medium (28), Mitteln (10, 16) zur Lieferung einer ersten (22A) und einer zweiten (22B) kohärenten Wellenfront für einen Lauf in dem Medium, womit eine optisch erzeugte stehende Welle (42) erzeugt wird, die eine periodische Veriation in den optischen Eigenschaften für Beugungszwecke herbeiführt, Mitteln (32) zur Lieferung einer dritten Wellenfront (30) für einen Lauf in dem Medium, wobei die dritte Wellenfront durch die periodische Variation gebeugt wird, gekennzeichnet durch Mittel (20A, 20B), welche die Orientierung der optisch erzeugten stehenden Welle ansprechend auf eine Änderung der Wellenlänge der ersten und zweiten Wellenfront kippen läßt, und Mittel (13) zum Variieren der Wellenlänge der ersten und zweiten Wellenfront für eine Änderung der Periodizität der Variation, wodurch die Bragg-Bedingung erfüllt bleibt, während die Beugungsrichtung der dritten Wellenfront geändert wird.

2. Ablenker nach Anspruch 1, bei welchem die Kippmittel erste (20A) und zweite (20B) Beugungsmittel umfassen.

3. Ablenker nach Anspruch 1, bei welchem die Kippmittel ein Transmissions-Beugungsgitter enthalten.

4. Ablenker nach Anspruch 1, bei welchem die Kippmittel ein Reflexions-Beugungsgitter enthalten.

5. Ablenker nach Anspruch 1, bei welchem die Kippmittel transmissions-holographische Mittel enthalten.

6. Ablenker nach Anspruch 1, bei welchem die Kippmittel reflexions-holographische Mittel enthalten.

7. Ablenker nach Anspruch 1, bei welchem die Kippmittel Prismenmittel enthalten.

8. Ablenker nach Anspruch 1 und 2, bei welchem die ersten und zweiten Kippmittel die + und −1 Beugungsordnungen aus dem gleichen Transmissions-Beugungsgitter umfassen.

9. Ablenker nach Anspruch 2 und 4, bei welchem die ersten und zweiten Kippmittel die +1 und −1 Beugungsordnungen aus dem gleichen Reflexions-Beugungsgitter umfassen.

**Revendications**

1. Déflecteur de lumière commandé par l'interaction de deux faisceaux lumineux, comportant un milieu transparent (28) actif du point de vue optique, des moyens (10, 16) servant à former un premier front d'onde cohérent (22A) et un second front d'onde cohérent (22B) destinés à se déplacer dans ledit milieu en produisant de ce fait une onde stationnaire (42) obtenue optiquement, qui provoque une variation périodique des propriétés optiques à des fins de diffraction, des moyens (32) servant à produire un troisième front d'onde (30) de manière qu'il se déplace dans ledit milieu, ledit troisième front d'onde étant diffracté sous l'effet de la variation périodique, caractérisé par des moyens (20A, 20B) destinés à provoquer une inclinaison de l'orientation de ladite onde stationnaire obtenue optiquement, en réponse à une variation de la longueur d'onde desdits premier et second fronts d'ondes, et des moyens (13) pour modifier la longueur d'onde desdits premier et second fronts d'ondes pour modifier la périodicité de la variation, avec pour effet que la condition de Bragg reste satisfaite, tandis que la direction de diffraction dudit troisième front d'onde est modifiée.

2. Déflecteur selon la revendication 1, dans lequel lesdits moyens d'inclinaison comprennent des premiers moyens de diffraction (20A) et des seconds moyens de diffraction (20B).

3. Déflecteur selon la revendication 1, dans lequel lesdits moyens d'inclinaison incluent un réseau de diffraction à réflexion.

4. Déflecteur selon la revendication 1, dans lequel lesdits moyens d'inclinaison incluent un réseau de diffraction à réflexion.

5. Déflecteur selon la revendication 1, dans lequel lesdits moyens d'inclinaison incluent des moyens holographiques à transmission.

6. Déflecteur selon la revendication 1, dans lequel lesdits moyens d'inclinaison incluent des moyens holographiques à réflexion.

7. Déflecteur selon la revendication 1, dans lequel lesdits moyens d'inclinaison incluent des moyens en forme de prisme.

8. Déflecteur selon la revendication 2 et 3, dans lequel les premiers et seconds moyens d'inclinaison comprennent les ordres de diffraction +1 et −1 produits par le même réseau de diffraction à transmission.

9. Déflecteur selon la revendications 2 et 4, dans lequel les premiers et seconds moyens d'inclinaison comprennent les ordres de diffraction +1 et

−1 produits par le même réseau de diffraction à réflexion.

F I G. 1

F I G. 2

FIG. 3

FIG. 4

2